# EUROPEAN PATENT APPLICATION

(11) **EP 2 546 316 A1**
(43) Date of publication of application: **16.01.2013**
(21) Application number: 12175408.9
(22) Date of filing: 06.07.2012
(51) Int. Cl.: C09J 7/02

(54) **Masking film-attached original plate for light guide plate**

(30) Priority: 11.07.2011 JP 2011153191; 06.03.2012 JP 2012049657
(71) Applicant: SUMITOMO CHEMICAL CO., LTD., Tokyo 104-8260 (JP)
(72) Inventor: Kato, Yasunori, Niihama-shi, Ehime 792-0015 (JP); Sakata, Norimitsu, Niihama-shi, Ehime 792-0015 (JP)
(74) Representative: Jackson, Martin Peter

(57) **Abstract**

The masking film-attached original plate 1 for light guide plate includes an original plate 2 for light guide plate and masking films 3A and 3B attached to both sides of the original plate 2 for the light guide plate, respectively. The ordinary adhesion strength of the masking films 3A and 3B to the original plate 2 for the light guide plate is 10-120 gf/25 mm. The ordinary adhesion strength is the adhesion strength immediately after the masking films 3A and 3B have been attached to the original plate 2 for the light guide plate. The post-heating adhesion strength of the masking films 3A and 3B to the original plate 2 is no greater than 120 gf/25 mm. The post-heating adhesion strength is the adhesion strength after heating the original plate 2 for the light guide plate at 70°C for 40 minutes to which the masking films 3A and 3B are attached.

## Description

### BACKGROUND OF THE INVENTION

### Field of the Invention

The present invention relates to a masking film-attached original plate for a light guide plate wherein a masking film is attached to a surface of an original plate for a light guide plate, to a method for producing a single-side masking film-attached patterned light guide plate using the masking film-attached original plate for the light guide plate, and to a method for producing a patterned light guide plate using the masking film-attached original plate for the light guide plate.

### Related Background Art

Conventional masking film-attached original plate for the light guide plates are known as described in Patent document 1, having a masking film for preventing damage attached to the surface of the original plate for the light guide plate.

Patent document 1: Japanese Unexamined Patent Application Publication No. 2005-131783

### SUMMARY OF THE INVENTION

Incidentally, during inventory storage, transport or processing of a masking film-attached original plate for a light guide plate, the edges of the masking film often naturally peel from the original plate for the light guide plate, producing raised edges of the masking film. In addition, the masking film-attached original plate for the light guide plate may be exposed to high temperature when a pattern is heat dried after the pattern was formed on a masking film-attached original plate for a light guide plate, or during storage or transport of the masking film-attached original plate for the light guide plate. When it is attempted to subsequently release the masking film from the original plate for the light guide plate, the masking film often will fail to be easily released.

It is an object of the present invention to provide a masking film-attached original plate for a light guide plate, a method for producing a single-side masking film-attached patterned light guide plate, and a method for producing a patterned light guide plate that can prevent the raised edges of the masking film and that can easily release the masking film.

A masking film-attached original plate for a light guide plate according to one aspect of the present invention includes an original plate for the light guide plate; and a masking film attached to a surface of the original plate for the light guide plate, wherein an ordinary adhesion strength of the masking film to the surface of the original plate for the light guide plate is 10-120 gf/25 mm, and wherein a post-heating adhesion strength of the masking film to at least a non-pattern-forming side of the original plate for the light guide plate is no greater than 120 gf/25 mm, the post-heating adhesion strength being an adhesion strength after heating the masking film-attached original plate for the light guide plate at 70°C for 40 minutes.

By thus specifying an ordinary adhesion strength of at least 10 gf/25 mm for the masking film to the surface of the original plate for the light guide plate in the masking film-attached original plate for the light guide plate, natural peeling of the masking film from the original plate for the light guide plate during inventory storage, transport or processing of the masking film-attached original plate for the light guide plate is inhibited. This can prevent the masking film from having raised edges on the original plate for the light guide plate. In addition, by limiting the ordinary adhesion strength of the masking film to no greater than 120 gf/25 mm to the surface of the original plate for the light guide plate, the masking film will be easily releasable from the original plate for the light guide plate when the masking film is intentionally released.

When a masking film is released from the pattern-forming side of the original plate for the light guide plate and a dot pattern is to be printed on the pattern-forming side with solvent ink, the masking film-attached original plate for the light guide plate is heated with a masking film attached to the non-pattern-forming side of the original plate for the light guide plate, in order to dry the ink. In addition, masking film-attached original plates for the light guide plates are often exposed to high temperature during their storage or transport. In this regard, if the post-heating adhesion strength is defined as the adhesion strength after heating the masking film-attached original plate for the light guide plate at 70°C for 40 minutes, and the post-heating adhesion strength of the masking film attached to at least the non-pattern-forming side of the original plate for the light guide plate is no greater than 120 gf/25 mm, it will be easy to release the masking film from the original plate for the light guide plate when the masking film is intentionally released, even after the masking film-attached original plate for the light guide plate has been heated or exposed to high temperature.

The method for producing a single-side masking film-attached patterned light guide plate, according to one aspect of the present invention, includes the steps of: preparing the aforementioned masking film-attached original plate for the light guide plate; releasing the masking film attached to the pattern-forming side of the original plate for the light guide plate; and forming a pattern on the pattern-forming side of the original plate for the light guide plate.

By employing the method for producing a single-side masking film-attached patterned light guide plate, the masking film-attached original plate for the light guide plate can prevent raised edges of the masking film on the original plate for the light guide plate during inventory storage, transport or processing, while also facilitating release of the masking film from the original plate for the light guide plate when the masking film attached to the pattern-forming side of the original plate for the light guide plate is to be intentionally released.

The forming the pattern may include printing a dot pattern on the pattern-forming side with ink containing a solvent, and subsequently heating the original plate for the light guide plate to dry the ink. In this case as well, using the masking film-attached original plate for the light guide plate described above can facilitate release of the masking film from the original plate for the light guide plate when the masking film attached to the non-pattern-forming side of the original plate for the light guide plate is to be intentionally released after the original plate for the light guide plate has been heated to dry the ink.

The original plate for the light guide plate may be heated at 50 to 70°C for 20 to 40 minutes. Since the post-heating adhesion strength is defined as the adhesion strength after heating the masking film-attached original plate for the light guide plate at 70°C for 40 minutes, as mentioned above, the masking film can be easily and reliably released from the original plate for the light guide plate after heating the original plate for the light guide plate at 50 to 70°C for 20 to 40 minutes.

In addition, the method for producing a patterned light guide plate according to one aspect of the present invention includes the steps of: preparing the aforementioned masking film-attached original plate for the light guide plate; releasing the masking film attached to the pattern-forming side of the original plate for the light guide plate, forming a pattern on the pattern-forming side of the original plate for the light guide plate, and releasing the masking film attached to the non-pattern-forming side of the original plate for the light guide plate.

In the method for producing a patterned light guide plate, using the masking film-attached original plate for the light guide plate can prevent raised edges of the masking film on the original plate for the light guide plate during inventory storage, transport or processing, while also facilitating release of the masking film from the original plate for the light guide plate when the masking film attached to the pattern-forming side of the original plate for the light guide plate is to be intentionally released. Release of the masking film from the original plate for the light guide plate can also be facilitated when the masking film attached to the non-pattern-forming side of the original plate for the light guide plate is to be intentionally released after the masking film-attached original plate for the light guide plate has been exposed to high temperature, for example.

As described above, it is possible to prevent raised edges of the masking film on the original plate for the light guide plate while allowing easy release of the masking film from the original plate for the light guide plate. This facilitates production of a single-side masking film-attached patterned light guide plate, and a patterned light guide plate, and is therefore advantageous in terms of productivity.

### BRIEF DESCRIPTION OF THE DRAWINGS

Fig. 1 is a side view of an embodiment of a masking film-attached original plate for the light guide plate according to an embodiment.
Fig. 2 is a flow chart showing the procedure for producing a patterned light guide plate using the masking film-attached original plate for the light guide plate shown in Fig. 1.
Fig. 3 is a side view for the steps for producing a patterned light guide plate using the masking film-attached original plate for the light guide plate shown in Fig. 1.
Fig. 4 is a table showing the evaluation results for the physical properties, the ordinary adhesion strength and the post-heating adhesion strength of masking films used in the examples and comparative examples.
Fig. 5 is a perspective view of a method for measuring the ordinary adhesion strength and post-heating adhesion strength of a masking film.
Fig. 6 is a perspective view illustrating the definition of raised edges of a masking film.

### DESCRIPTION OF THE PREFERRED EMBODIMENTS

Preferred embodiments of a masking film-attached original plate for a light guide plate, a single-side masking film-attached patterned light guide plate and a method for producing a patterned light guide plate according to an embodiment, will now be described in detail with reference to the accompanying drawings.

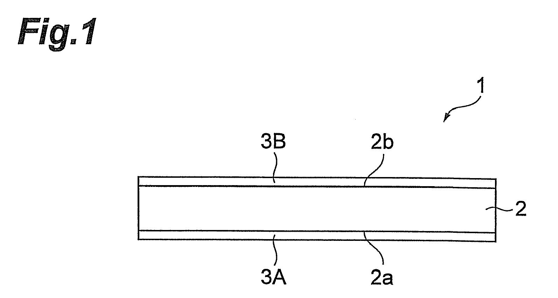

Fig. 1 is a side view of a masking film-attached original plate for the light guide plate according to an embodiment. As shown in Fig. 1, the masking film-attached original plate 1 for the light guide plate of this embodiment comprises an original plate 2 for the light guide plate and a masking film 3B attached to one side of the original plate 2. The masking film-attached original plate 1 may comprise a masking film 3A attached to the other side of the original plate 2.

The original plate 2 may be formed from a transparent material such as polymethyl methacrylate resin (PMMA), polystyrene, polycarbonate, acryl-styrene copolymer, cycloolefin-based resin, or the like. The thickness of the original plate 2 is 1-4 mm, for example. One main side of the original plate 2 may be the printing side (pattern-forming side) 2a on which a dot pattern (described hereunder) is to be printed with ink containing a solvent (solvent ink). The other main side of the original plate 2 may be the non-printing side (non-pattern-forming side) 2b which is not to be printed with the dot pattern.

The masking films 3A and 3B may serve to protect the printing side 2a and non-printing side 2b of the original plate 2 so that they are not damaged. Each of the masking films 3A and 3B may include a substrate which may be formed of a polyolefin (PO) resin such as a polypropylene (PP) resin or polyethylene (PE) resin, and an adhesive layer which may be formed of a polyolefin (PO) elastomer, ethylene-vinyl acetate copolymer (EVA) or the like. The thickness of each of the masking films 3A and 3B is 80-90 µm, for example.

For production of such a masking film-attached original plate 1, first, the starting material such as PMMA may be extrusion molded into a sheet to produce the original plate 2. Then, the masking films 3A and 3B may be attached to both sides of the original plate 2, respectively, at a sheet temperature of 40 to 100°C. Then, the original plate 2 to which the masking films 3A and 3B have been attached may be cut to the product size, to obtain the masking film-attached original plate 1.

The ordinary adhesion strength of the masking film 3B to the original plate 2 is 10-120 gf/25 mm and may be 10-100 gf/25 mm. The ordinary adhesion strength of the masking film 3A to the original plate 2 may be 10-120 gf/25 mm and may be 10-100 gf/25 mm. The ordinary adhesion strength of the masking films 3A and 3B is the adhesion strength of the masking films 3A and 3B immediately after the masking films 3A and 3B have been attached to the original plate 2. The post-heating adhesion strength of the masking film 3B to the original plate 2 is no greater than 120 gf/25 mm and may be no greater than 100 gf/25 mm. The post-heating adhesion strength of the masking film 3A to the original plate 2 may be no greater than 120 gf/25 mm and may be no greater than 100 gf/25 mm. The post-heating adhesion strength of the masking films 3A and 3B is the adhesion strength of the masking films 3A and 3B after the original plate 2 to which the masking films 3A and 3B are attached has been heated at 70°C for 40 minutes.

The ordinary adhesion strength and post-heating adhesion strength are both represented as the adhesion strength for a width of 25 mm of the original plate 2 and masking films 3A and 3B. One reason for which the post-heating adhesion strength is defined as the adhesion strength after the original plate 2 to which the masking films 3A and 3B are attached has been heated at 70°C for 40 minutes, may be as follows. The masking film-attached original plate 1 will usually be heated at about 70°C for about 40 minutes, in order to dry the solvent ink after the dot pattern is printed on the printing side 2a of the original plate 2 with solvent ink, as described hereunder.

The tensile strength of the masking films 3A and 3B may be 10-200 MPa. The Young's modulus of the masking films 3A and 3B may be 100-1000 N/mm².

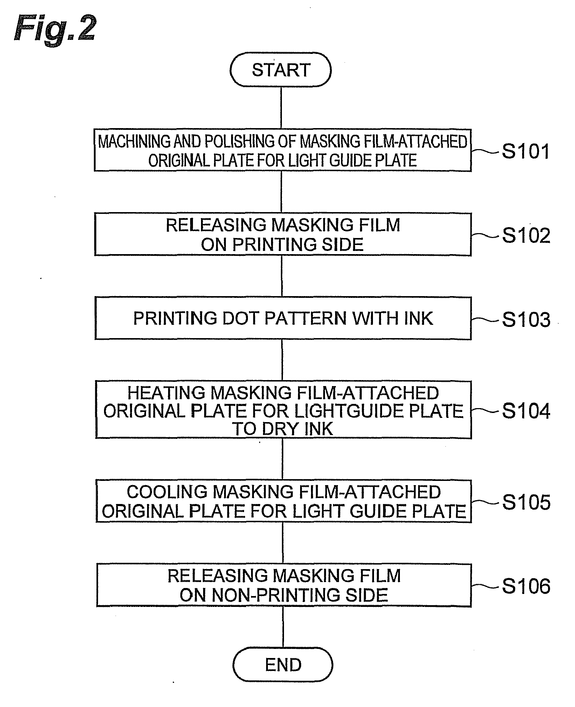

A method for producing a patterned light guide plate using the masking film-attached original plate 1 described above will now be explained with reference to Fig. 2. The patterned light guide plate may be mounted on a liquid crystal display device, which is not shown here. Specifically, the patterned light guide plate may constitute part of a backlight and may be used for illumination of a liquid crystal panel with a light source.

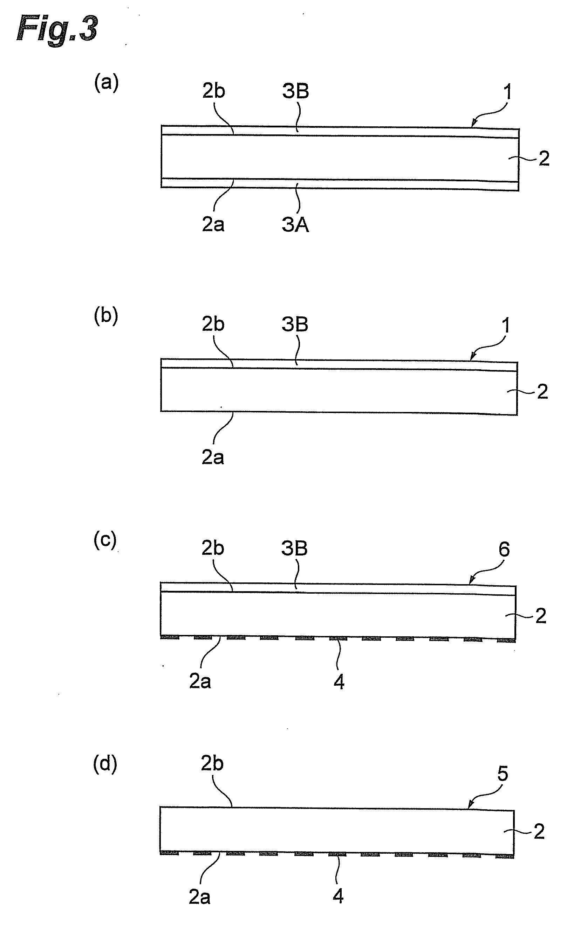

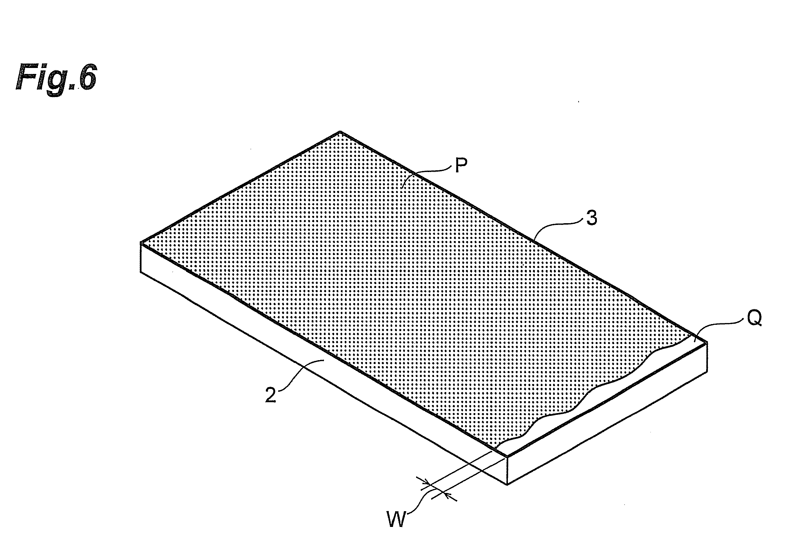

First, as shown in Fig. 3(a), the masking film-attached original plate 1 may be machined into the outer shape of the final product, and subjected to edge polishing (step S101). For example, when the final product is to be a 40-inch type plate, the outer dimensions of the masking film-attached original plate 1 are 500 mm × 900 mm. In this case, since the ordinary adhesion strength of the masking films 3A and 3B is 10 gf/25 mm or greater, the edges of the masking films 3A and 3B undergo substantially no natural peeling from the original plate 2, or in other words, substantially no raised edges occur in the masking films 3A and 3B (see Fig. 6). The edges of the printing side 2a and the non-printing side 2b of the original plate 2 can thus be adequately protected.

Next, as shown in Fig. 3(b), the masking film 3A attached to the printing side 2a of the original plate 2 may be released (step S102). Since the ordinary adhesion strength of the masking film 3A is no greater than 120 gf/25 mm, it is possible to easily release the masking film 3A from the original plate 2. This will substantially eliminate problems such as streaks of the adhesive layer remaining on the printing side 2a due to failure of the masking film 3A to be cleanly released, and burden and stress on workers during manual release of the masking film 3A.

Next, as shown in Fig. 3(c), a dot pattern 4 may be screen printed on the printing side (reflection surface) 2a of the original plate 2 with solvent ink (step S103). Then, the masking film-attached original plate 1 on which the dot pattern 4 has been printed may be heated in a drying furnace at 50°C to 70°C for 20-40 minutes to dry the solvent ink (step S 104). Since streaking of the adhesive layer may be prevented as mentioned above, there may be substantially no undesirable printing variations in the dot pattern 4. Also, since the masking film-attached original plate 1 may be heated at 50°C to 70°C for 20-40 minutes, it is possible to thoroughly dry the solvent ink in a short period of time.

Next, the masking film-attached original plate 1 on which the dot pattern 4 has been printed may be cooled to ordinary temperature (20 to 25°C) (step S105). This yields a single-side masking film-attached patterned light guide plate 6.

Next, as shown in Fig. 3(d), the masking film 3B attached to the non-printing side 2b of the original plate 2 may be released (step S106). A patterned light guide plate 5 is produced in this manner. Since the post-heating adhesion strength of the masking film 3B may be no greater than 120 gf/25 mm, it is possible to easily release the masking film 3B from the original plate 2. This will substantially eliminate streaking of the adhesive layer on the non-printing side 2b due to failure of the masking film 3B to be cleanly released. Thus, it is possible to prevent impairment of the outer appearance of the non-printing side 2b and minimize adhesion of dust and particulates on the non-printing side 2b. Therefore, the performance of the patterned light guide plate 5 is substantially unaffected.

In this case, after the masking film-attached original plate 1 was heated to dry the solvent ink, the masking film-attached original plate 1 was removed from the drying furnace and allowed to cool before releasing the masking film 3B. However, the masking film 3B may instead be released from the masking film-attached original plate 1 immediately after being removed from the drying furnace.

Step S101 above is a step of preparing the masking film-attached original plate 1. Step S102 is a step of releasing the masking film 3A attached to the pattern-forming side 2a of the original plate 2. Steps S103 to S105 are steps of forming the pattern 4 on the pattern-forming side 2a of the original plate 2. Step S 106 is a step of releasing the masking film 3B attached to the non-pattern-forming side 2b of the original plate 2.

In the embodiment described above, the ordinary adhesion strength of the masking films 3A and 3B to the original plate 2 is 10-120 gf/25 mm. Thus, it is possible to prevent raised edges of the masking films 3A and 3B on the original plate 2 during transport, inventory storage and processing of the masking film-attached original plate 1. It is also possible to release the masking films 3A and 3B easily from the original plate 2 when the masking films 3A and 3B are intentionally released.

Furthermore, since the post-heating adhesion strength of the masking films 3A and 3B to the original plate 2 is no greater than 120 gf/25 mm, the masking film 3B can be easily released when the masking film 3B is intentionally released from the original plate 2, even after the masking film-attached original plate 1 on which the dot pattern 4 has been printed (the single-side masking film-attached patterned light guide plate 6) has been heated. The masking films 3A and 3B can also be easily released from the original plate 2 when the masking film-attached original plate 1 has been exposed to high temperature during storage or transport of the masking film-attached original plate 1.

This can minimize the labor required for production of the single-side masking film-attached patterned light guide plate 6 and the patterned light guide plate 5, and can avoid reduction in performance of the patterned light guide plate 5.

The present invention is not limited to the embodiment described above. For example, the post-heating adhesion strength of the masking films 3A and 3B attached to both sides of the original plate 2 is no greater than 120 gf/25 mm in the embodiment described above. However, the masking film 3A attached to the printing side 2a of the original plate 2 is to be released before heating for printing of the dot pattern by the solvent ink. Therefore, only the post-heating adhesion strength of the masking film 3B attached to the non-printing side 2b of the original plate 2 may be limited to no greater than 120 gf/25 mm.

While the dot pattern 4 is screen printed on the printing side 2a of the original plate 2 with solvent ink in this embodiment, the pattern forming method is not particularly restricted to screen printing with solvent ink. For example, a pattern may be formed on the pattern-forming side 2a of the original plate 2 by UV cured screen printing or ink jet printing, or laser writing or the like. In such cases, heat treatment of the masking film-attached original plate 1 is unnecessary.

Working examples of a masking film-attached original plate for the light guide plate will now be described.

### (1) Examples

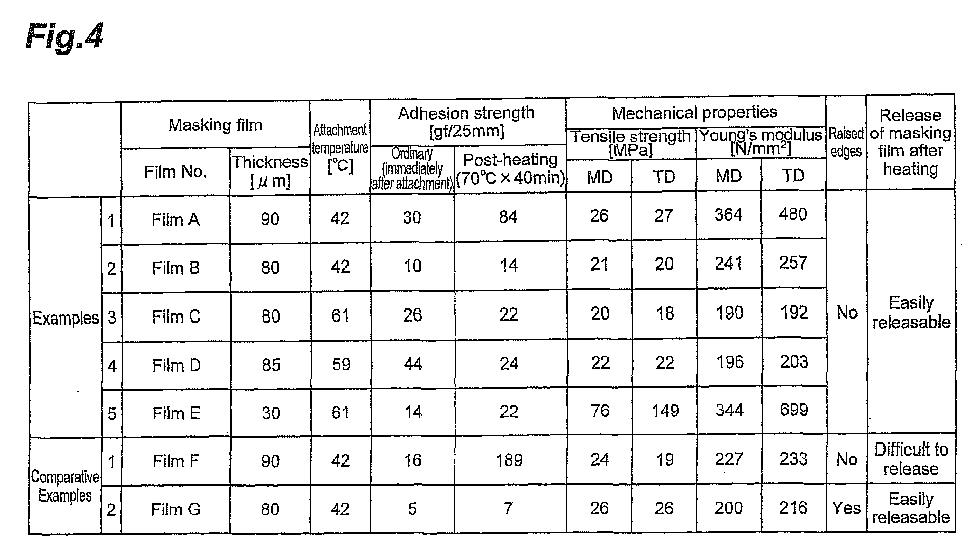

Masking films for Examples 1 to 5 were prepared, as shown in Fig. 4. For the masking film of Example 1 (Film A, "TORETEC 7232", product of Toray Advanced Film Co., Ltd.), the substrate was made of a PO resin, the adhesive layer was made of EVA, and the thickness was 90 µm. For the masking film of Example 2 (Film B, "DIFAREN K8510", product of DIC Corp.), the substrate was made of a PE resin, the adhesive layer was made of a PO elastomer, and the thickness was 80 µm. For the masking film of Example 3 (Film C, product of Tredegar Corp.), the substrate was made of a PO resin, the adhesive layer was made of a PO elastomer, and the thickness was 80 µm. For the masking film of Example 4 (Film D, product of Novacel, Inc.), the materials of the substrate and adhesive layer were unknown, and the thickness was 85 µm. For the masking film of Example 5 (Film E, "SAF-020 M", product of Futamura Chemical Co., Ltd.), the materials of the substrate and adhesive layer were unknown, and the thickness was 30 µm.

The masking films were each attached to both sides of a separately prepared original plate for the light guide plate, to obtain masking film-attached original plate for the light guide plates. The material used for the original plate for the light guide plate was PMMA ("SUMIPEX EXN", product of Sumitomo Chemical Co., Ltd.).

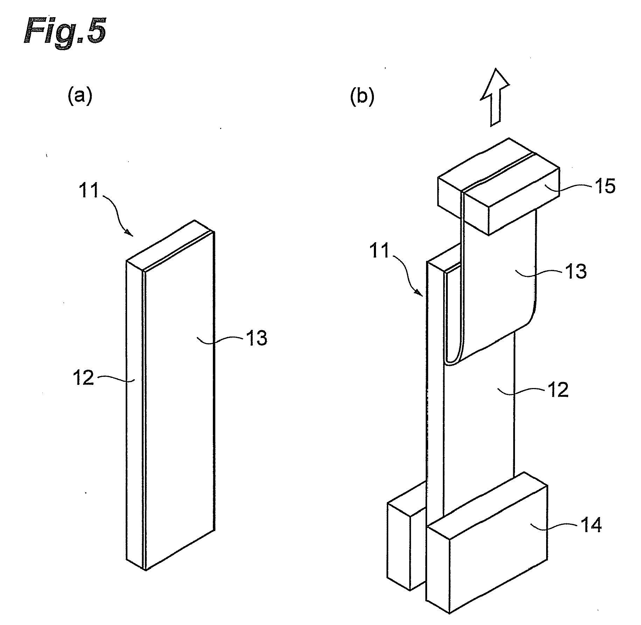

Then, each masking film-attached original plate 11 for the light guide plate was cut to dimensions of 300 mm × 25 mm, as shown in Fig. 5(a). Then, each masking film-attached original plate 11 was anchored in an upright position in Autograph AGS-50NX (product of Shimadzu Corp.), as shown in Fig. 5(b). The ordinary adhesion strength of the masking film 13 attached to the original plate 12 for light guide plate was measured. Specifically, the adhesion strength was measured with release in the 180 degree direction with a 50N load cell, at a pull rate of 300 mm/min. The measurement method was according to JIS K6854-2. In this method, one edge of the original plate 12 is clamped with a clamp member 14, and the masking film 13 is pulled upward, with the end of the masking film 13 that has been released in the 180 degree direction clamped with another clamp member 15.

Also, each masking film-attached original plate 11 was cut to dimensions of 300 mm × 25 mm, in the same manner as above. Each masking film-attached original plate 11 was allowed to stand for 40 minutes in a thermostatic bath at 70°C, and then the post-heating adhesion strength of the masking film 13 was measured by the same measuring method as for the ordinary adhesion strength.

The measurement results for the ordinary adhesion strength and post-heating adhesion strength of each masking film are shown in Fig. 4. For the masking film of Example 1, the attachment temperature was 42°C, the ordinary adhesion strength was 30 gf/25 mm and the post-heating adhesion strength was 84 gf/25 mm. For the masking film of Example 2, the attachment temperature was 42°C, the ordinary adhesion strength was 10 gf/25 mm and the post-heating adhesion strength was 14 gf/25 mm. For the masking film of Example 3, the attachment temperature was 61°C, the ordinary adhesion strength was 26 gf/25 mm and the post-heating adhesion strength was 22 gf/25 mm. For the masking film of Example 4, the attachment temperature was 59°C, the ordinary adhesion strength was 44 gf/25 mm and the post-heating adhesion strength was 24 gf/25 mm. For the masking film of Example 5, the attachment temperature was 62°C, the ordinary adhesion strength was 14 gf/25 mm and the post-heating adhesion strength was 22 gf/25 mm.

The tensile strength and Young's modulus of each masking film were also measured, as the mechanical properties of the masking films of Examples 1 to 5. The measurement method for the tensile strength was according to JIS Z1702. The measurement method for the Young's modulus was according to JIS K7127.

The measurement results for the tensile strength and Young's modulus of each masking film are shown in Fig. 4. All of the masking films have tensile strengths between 10 and 200 MPa and Young's moduli between 100 and 1000 N/mm².

### (2) Comparative examples

Masking films were prepared for Comparative Examples 1 and 2, as shown in Fig. 4. For the masking film of Comparative Example 1 (Film E, "#6281KL", product of Sekisui Chemical Industries, Ltd.), the substrate was made of a PE resin, the adhesive layer was made of EVA, and the thickness was 90 µm. For the masking film of Comparative Example 2 (Film G, product of Tredegar Corp.), the substrate was made of a PO resin, the adhesive layer was made of a PO elastomer, and the thickness was 80 µm.

These masking films were used to obtain masking film-attached original plates for the light guide plates in the same manner as Examples 1 to 5. The ordinary adhesion strength and post-heating adhesion strength of each masking film was also measured by the same method as for Examples 1 to 5. The tensile strength and Young's modulus of each masking film was also measured by the same method as for Examples 1 to 5.

The measurement results for the ordinary adhesion strength and post-heating adhesion strength of each masking film are shown in Fig. 4. For the masking film of Comparative Example 1, the attachment temperature was 42°C, the ordinary adhesion strength was 16 gf/25 mm and the post-heating adhesion strength was 189 gf/25 mm. For the masking film of Comparative Example 2, the attachment temperature was 42°C, the ordinary adhesion strength was 5 gf/25 mm and the post-heating adhesion strength was 7 gf/25 mm.

The measurement results for the tensile strength and Young's modulus of each masking film are also shown in Fig. 4. All of the masking films have tensile strengths between 10 and 200 MPa and Young's moduli between 100 and 1000 N/mm².

### (3) Evaluation

As clearly seen in Fig. 4, the ordinary adhesion strengths of the masking films in Examples 1 to 5 are 10-120 gf/25 mm, and therefore raising of the edges of the masking films on the light guide plates did not occur.

As shown in Fig. 6, when the masking film 3 is attached to one entire main side of the original plate 2, there can be seen a region where the masking film 3 is completely adhering (contact-bonded) on the original plate 2 (the contact-bonded regions) P, and a region where the masking film 3 is not adhering to the original plate 2 (non-contact-bonded regions) Q. The non-contact-bonded region Q of the masking film 3 is an area where the masking film 3 is raised from the original plate 2, with an air layer being formed between the original plate 2 and the masking film 3, and it is formed near the edge of the original plate 2.

The masking film 3 is judged to have no raised edge if the maximum length W of the non-contact-bonded region Q is within 5 mm of the edge of the original plate 2. The masking film 3 is judged to have a raised edge if the maximum length W of the non-contact-bonded region Q is greater than 5 mm from the edge of the original plate 2.

The reason for the definition for raised edges of the masking film is as follows. After the masking film has been attached to the original plate for the light guide plate, the masking film-attached original plate for the light guide plate is cut to the product size using a rotating disc saw. During this time, the masking film will often undergo slight peeling near the edge of the cut masking film-attached original plate for the light guide plate. However, there is no particular problem so long as the length of the peeled section is within 5 mm from the edge of the original plate for the light guide plate.

Since the post-heating adhesion strength of the masking film is no greater than 120 gf/25 mm in Examples 1 to 5, the masking film can be easily released from the original plate for the light guide plate even after heating the masking film-attached original plate for the light guide plate.

The masking film had no raised edges on the original plate for the light guide plate in Comparative Example 1, since the ordinary adhesion strength of the masking film was 10-120 gf/25 mm. However, since the post-heating adhesion strength of the masking film was higher than 120 gf/25 mm, it was difficult to release the masking film from the original plate for the light guide plate. The masking film in Comparative Example 2 was easy to release from the original plate for the light guide plate even after heating the masking film-attached original plate for the light guide plate, since the post-heating adhesion strength of the masking film was no greater than 120 gf/25 mm. However, since the ordinary adhesion strength of the masking film was lower than 10 gf/25 mm, raised edges were produced in the masking film on the light guide plate.

The above demonstrates the effectiveness of an ordinary adhesion strength of 10-120 gf/25 mm for the masking film to the original plate for the light guide plate, and a post-heating adhesion strength of no greater than 120 gf/25 mm for the masking film to the original plate for the light guide plate.

## Claims

1. A masking film-attached original plate for a light guide plate comprising:
an original plate for the light guide plate; and
a masking film attached to a surface of the original plate for the light guide plate,
wherein an ordinary adhesion strength of the masking film to the surface of the original plate for the light guide plate is 10-120 gf/25 mm, and
wherein a post-heating adhesion strength of the masking film to at least a non-pattern-forming side of the original plate for the light guide plate is no greater than 120 gf/25 mm, the post-heating adhesion strength being an adhesion strength after heating the masking film-attached original plate for the light guide plate at 70°C for 40 minutes.

2. A method for producing a single-side masking film-attached patterned light guide plate comprising the steps of:
preparing the masking film-attached original plate for the light guide plate according to claim 1,
releasing the masking film attached to a pattern-forming side of the original plate for the light guide plate, and
forming a pattern on the pattern-forming side of the original plate for the light guide plate.

3. The method for producing a single-side masking film-attached patterned light guide plate according to claim 2, wherein the forming the pattern comprises printing a dot pattern on the pattern-forming side with ink containing a solvent and subsequently heating the original plate for the light guide plate to dry the ink.

4. The method for producing a single-side masking film-attached patterned light guide plate according to claim 3, wherein the original plate for the light guide plate is heated at 50 to 70°C for 20 to 40 minutes.

5. A method for producing a patterned light guide plate comprising the steps of:
preparing the masking film-attached original plate for the light guide plate according to claim 1,
releasing the masking film attached to a pattern-forming side of the original plate for the light guide plate,
forming a pattern on the pattern-forming side of the original plate for the light guide plate, and
releasing the masking film attached to the non-pattern-forming side of the original plate for the light guide plate.
